# EUROPEAN PATENT SPECIFICATION

(11) **EP 4 215 425 B1**
(45) Date of publication and mention of the grant of the patent: **03.09.2025**
(21) Application number: 23152424.0
(22) Date of filing: 19.01.2023
(51) Int. Cl.: B60W 30/09, B60W 50/10, B60W 10/04, B60W 10/184, B60W 10/196

(54) **DECELERATION SUPPORT DEVICE, DECELERATION SUPPORT METHOD, DECELERATION SUPPORT PROGRAM, AND VEHICLE**
VERZÖGERUNGSUNTERSTÜTZUNGSVORRICHTUNG, VERZÖGERUNGSUNTERSTÜTZUNGSVERFAHREN, VERZÖGERUNGSUNTERSTÜTZUNGSPROGRAMM UND FAHRZEUG
DISPOSITIF D'AIDE À LA DÉCÉLÉRATION, PROCÉDÉ D'AIDE À LA DÉCÉLÉRATION, PROGRAMME D'AIDE À LA DÉCÉLÉRATION ET VÉHICULE

(30) Priority: 21.01.2022 JP 2022007946
(43) Date of publication of application: 26.07.2023
(73) Proprietor: TOYOTA JIDOSHA KABUSHIKI KAISHA, Toyota-shi Aichi 471-8571 (JP)
(72) Inventor: IKEZAWA, Yuta, Toyota-shi, 471-8571 (JP); TOCHIGI, Kohei, Toyota-shi, 471-8571 (JP)
(74) Representative: J A Kemp LLP

(56) References cited:
- EP-A1- 3 407 327
- EP-A2- 1 060 939
- EP-A2- 1 288 055
- US-A1- 2010 023 226
- US-A1- 2018 178 782

## Description

### BACKGROUND OF THE INVENTION

### 1. Field of the Invention

The present invention relates to a deceleration support device, a deceleration support method, a deceleration support program, and a vehicle.

### 2. Description of the Related Art

The deceleration support device automatically decelerates a vehicle by controlling a deceleration device when an object requiring deceleration of the vehicle (own vehicle), such as another vehicle at low speed or a stopped vehicle, is detected in front of the own vehicle.

The deceleration support device interrupts automatic deceleration when a driving operation is performed by a driver while the vehicle is being automatically decelerated. For example, Japanese Patent Application Laid-open No. H08-183371 describes that automatic deceleration control is temporarily stopped when a driver depresses an accelerator pedal during automatic deceleration control by auto-cruise control. According to this type of deceleration support device, it is possible to prevent the vehicle from being decelerated against the driver's intention due to automatic deceleration even though the driver does not desire the automatic deceleration.

EP 1,288,055 discloses a deceleration support device in accordance with the pre-characterising section of claim 1.

In a conventional deceleration support device such as the deceleration support device described in the above Laid-open Publication, when the driving operation is canceled by the driver, if an object requiring deceleration of the vehicle is detected, the deceleration is resumed.

However, depending on an object being detected, it is preferable that automatic deceleration is not resumed, and the driver may feel annoyed by the resume of the automatic deceleration. For example, when the detected object is another vehicle that is traveling at a low speed, it is preferable to resume automatic deceleration, but when the detected object is a sign such as a stop sign or another vehicle turning right or left at an intersection, the driver may not want automatic deceleration to resume.

A main object of the present invention is to prevent a driver from feeling annoyed by resumption of automatic deceleration when the driver cancels a driving operation in a situation where the automatic deceleration is interrupted.

According to the present invention, a deceleration support device is provided which comprises an object detection device that is configured to detect an object at least in front of a vehicle, a braking/driving operation detection device that detects a braking/driving operation by a driver, a speed reduction device that decelerates the vehicle, and an electronic control unit that controls the speed reduction device; the electronic control unit is configured to control the speed reduction device to execute automatic deceleration control for automatically decelerating the vehicle when the object detection device detects an object that requires deceleration of the vehicle and the braking/driving operation detection device does not detect a braking/driving operation, and interrupt the automatic deceleration control when a driving operation is detected by the braking/driving operation detection device in a situation where the automatic deceleration control is being executed.

With an object that requires deceleration of the vehicle and that does not prevent the vehicle from passing through a position of the object being defined as a specific object, the electronic control unit is configured to resume the automatic deceleration control if the electronic control unit determines that the object is not a specific object, but is configured not to resume the automatic deceleration control if the electronic control unit determines that the object is a specific object, when the driving operation is no longer detected by the braking/driving operation detection device in a situation where the automatic deceleration control is interrupted and in that the electronic control unit is configured, when the driving operation is no longer detected by the braking/driving operation detection device in a situation where the object detection device detects a plurality of objects requiring deceleration of the vehicle and the automatic deceleration control is interrupted, to resume the automatic deceleration control if the electronic control unit determines that the plurality of objects include an object other than the specific object, but not to resume the automatic deceleration control if the electronic control unit determines that all of the plurality of objects are the specific objects.

According to the present invention, a deceleration support method is provided which comprises a step of executing an automatic deceleration control that automatically decelerates a vehicle when an object requiring deceleration of the vehicle is detected by an object detection device that is configured to detect an object at least in front of the vehicle and a braking/driving operation is not detected by a braking/driving operation detection device that detects a braking/driving operation by a driver, and a step of interrupting the automatic deceleration control when the driving operation is detected by the braking/driving operation detection device while the automatic deceleration control is being executed.

With an object that requires deceleration of the vehicle and that does not prevent the vehicle from passing through a position of the object being defined as a specific object, the deceleration support method further comprises a step of resuming the automatic deceleration control if it is determined that the object is not a specific object, but not resuming the automatic deceleration control if it is determined that the object is a specific object, when the driving operation is no longer detected by the braking/driving operation detection device in a situation where the automatic deceleration control is interrupted and, when the driving operation is no longer detected by the braking/driving operation detection device in a situation where the object detection device detects a plurality of objects requiring deceleration of the vehicle and the automatic deceleration control is interrupted, the deceleration support method resumes the automatic deceleration control if the electronic control unit determines that the plurality of objects include an object other than the specific object, but the deceleration support method does not resume the automatic deceleration control if the electronic control unit determines that all of the plurality of objects are the specific objects.

Further, according to the present invention, a deceleration support program is provided which comprises a step of executing an automatic deceleration control that automatically decelerates a vehicle when an object requiring deceleration of the vehicle is detected by an object detection device that is configured to detect an object at least in front of the vehicle and a braking/driving operation is not detected by a braking/driving operation detection device that detects a braking/driving operation by a driver, and a step of interrupting the automatic deceleration control when the driving operation is detected by the braking/driving operation detection device while the automatic deceleration control is being executed.

With an object that requires deceleration of the vehicle and that does not prevent the vehicle from passing through a position of the object being defined as a specific object, the deceleration support program further comprises a step of resuming the automatic deceleration control if it is determined that the object is not a specific object, but not resuming the automatic deceleration control if it is determined that the object is a specific object, when the driving operation is no longer detected by the braking/driving operation detection device in a situation where the automatic deceleration control is interrupted and, when the driving operation is no longer detected by the braking/driving operation detection device in a situation where the object detection device detects a plurality of objects requiring deceleration of the vehicle and the automatic deceleration control is interrupted, the deceleration support program comprises a step of resuming the automatic deceleration control if the electronic control unit determines that the plurality of objects include an object other than the specific object, but the deceleration support program comprises a step of not resuming the automatic deceleration control if the electronic control unit determines that all of the plurality of objects are the specific objects.

According to the deceleration support device, the deceleration support method and the deceleration support program, the automatic deceleration control is executed when the object detection device detects an object that requires deceleration of the vehicle and the braking/driving operation detection device does not detect a braking/driving operation, and the automatic deceleration control is interrupted when a driving operation is detected by the braking/driving operation detection device in a situation where the automatic deceleration control is being executed. Therefore, when the driver performs a driving operation while automatic deceleration control is being executed, the automatic deceleration control is interrupted.

Further, the automatic deceleration control is resumed if it is determined that the object is not a specific object, but the automatic deceleration control is not resumed if it is determined that the object is a specific object, when the driving operation is no longer detected by the braking/driving operation detection device in a situation where the automatic deceleration control is interrupted. Therefore, when the object is determined to be a specific object, the automatic deceleration control is not resumed, thereby preventing the driver from feeling annoyed by the resumption of the automatic deceleration. Notably, when the object is determined to be a specific object, the driver can accelerate or decelerate the vehicle by braking/driving operation based on his/her own intention.

According to the above aspects, when the driving operation is no longer detected by the braking/driving operation detection device in a situation where the object detection device detects a plurality of objects requiring deceleration of the vehicle and the automatic deceleration control is interrupted, the automatic deceleration control is resumed if the electronic control unit determines that the plurality of objects include an object other than the specific object, but the automatic deceleration control is not resumed if the electronic control unit determines that all of the plurality of objects are the specific objects.

Therefore, when the plurality of objects includes a non-specific object, the automatic deceleration control is resumed, so that the vehicle is decelerated by the automatic deceleration control to prevent the vehicle from colliding with the non-specific object. On the other hand, when all of the plurality of objects is the specific objects, the automatic deceleration control is not resumed, thereby preventing the driver from feeling annoyed by the resumption of an automatic deceleration.

In another aspect of the present invention, the specific object is an object that does not displace with respect to a road on which the vehicle travels and that the vehicle can pass through without colliding.

According to the above aspect, objects that exist in a stationary state on a road, such as a vehicle stopped on the road, a fallen object on the road, a fallen tree, etc. are objects that are not displaced from the road on which the vehicle is traveling, but can be prevented from being judged as specific objects.

Further, in another aspect of the present invention, the electronic control unit is configured to resume the automatic deceleration control if the electronic control unit determines that the object is not a specific object, but terminate the automatic deceleration control if the electronic control unit determines that the object is a specific object, when the driving operation is no longer detected by the braking/driving operation detection device in a situation where the automatic deceleration control is interrupted.

According to the above aspect, the automatic deceleration control is resumed if it is determined that the object is not a specific object when the driving operation is no longer detected by the braking/driving operation detection device in a situation where the automatic deceleration control is interrupted. Therefore, it is possible to decelerate the vehicle by the automatic deceleration control and prevent the vehicle from colliding with a non-specific object. On the other hand, the automatic deceleration control is terminated if it is determined that the object is a specific object when the driving operation is no longer detected by the braking/driving operation detection device in a situation where the automatic deceleration control is interrupted. Therefore, it is possible to prevent the driver from feeling annoyed by the resumption of an automatic deceleration.

Further, in another aspect of the present invention, the electronic control unit is configured to resume the automatic deceleration control if the electronic control unit determines that a distance from the vehicle to the object is equal to or greater than a reference distance, but terminate the automatic deceleration control if the electronic control unit determines that the distance from the vehicle to the object is less than the reference distance, when the electronic control unit determines that the object is a specific object.

According to the above aspect, the automatic deceleration control is resumed if the electronic control unit determines that a distance from the vehicle to the object is equal to or greater than a reference distance. When a distance from the vehicle to the object is greater than or equal to the reference distance and the driver is not performing drive operation in a situation where the automatic deceleration control is interrupted and a specific object is detected, even the automatic deceleration control is resumed, the driver will not feel annoyed by the resumption of an automatic deceleration.

On the other hand, the automatic deceleration control is terminated when it is determined that a distance from the vehicle to the object is less than the reference distance in a situation where the specific object is detected and the driving operation is not detected. Therefore, it is possible to prevent the driver from feeling annoyed by the resumption of an automatic deceleration.

Further, in another aspect of the present invention, the electronic control unit is configured to variably set the reference distance according to a vehicle speed so that the reference distance increases as the vehicle speed increases.

The shorter a distance from the vehicle to a specific object and the higher a vehicle speed, the shorter the time required for the vehicle to reach the position of the specific object. Therefore, it is preferable that the reference distance for determining whether the automatic deceleration control should be resumed increases as a vehicle speed increases.

According to the above aspect, the reference distance is variably set according to a vehicle speed so that the reference distance increases as the vehicle speed increases. Therefore, in a situation where an object is determined to be a specific object, it is possible to appropriately determine whether or not the automatic deceleration control should be resumed regardless of the vehicle speed.

Furthermore, according to the present invention, a vehicle equipped with the deceleration support device described above is provided. According to this vehicle, it is possible to obtain the same benefits as those of the deceleration support device, the deceleration support method, and the deceleration support program described above.

In the present application, the term "an object that requires deceleration of the vehicle" means an object that exists on a road on which the vehicle travels and its surroundings and requires deceleration of the vehicle in order for the vehicle to travel safely and for the vehicle to travel in compliance with the Road Traffic Law. "Objects requiring vehicle deceleration" are classified into objects that are displaced with respect to a road on which the vehicle is traveling and objects that are not displaced with respect to the road on which the vehicle is traveling. Objects that are displaced from a road on which the vehicle is traveling are, for example, preceding vehicles, bicycles, and pedestrians. Objects that are not displaced with respect to a road on which the vehicle travels are further classified into objects that exist on the road in a stationary state and objects that do not exist on a road in a stationary (unchaging) state. Objects that exist on a road in a stationary state are, for example, stopped vehicles, fallen objects on the road, and fallen trees. Objects that do not exist on a road in a stationary state are, for example, traffic lights when lit in red or yellow, road signs such as "slow down" and "stop", road surface signs such as "slow down" and "stop", intersections, T-junctions, road curves, and the like.

Further, the phrase "does not prevent the vehicle from passing through a position of the object" means that the vehicle can pass through a position of the object without being prevented from traveling by the object. Therefore, the "specific object" is, for example, a traffic light when it is lit in red or yellow, road signs such as "slow down" and "stop", road surface signs such as "slow down" and "stop", intersections, T-junctions, road curves, etc.

Other objects, other features and attendant advantages of the present invention will be readily understood from the description of the embodiments of the present invention described with reference to the following drawings.

### BRIEF DESCRIPTION OF THE DRAWINGS

FIG. 1 is a schematic configuration diagram showing an embodiment of a deceleration support device according to the present invention.
Fig. 2 is a flow chart showing a deceleration support control routine in the embodiment.
FIG. 3 is a flow chart showing a main part of a deceleration support control routine in a modified example.
FIG. 4 is a map for calculating a reference distance Lc based on a vehicle speed V.
FIG. 5 shows a situation in which the automatic deceleration control of the own vehicle has been interrupted and the own vehicle is approaching another vehicle that is stopped in front of it.
FIG. 6 shows a situation in which the automatic deceleration control of the own vehicle has been interrupted and the own vehicle is approaching another stopped vehicle and a pedestrian crossing in front of it.
FIG. 7 shows a situation in which the automatic deceleration control of the own vehicle has been interrupted and the own vehicle is approaching a pedestrian crossing in front of it.
FIG. 8 shows a situation in which the automatic deceleration control of the own vehicle has been interrupted and the own vehicle is approaching a pedestrian crossing and a traffic light in front of it.

### DETAILED DESCRIPTION

The present invention will now be described in detail with reference to the accompanying drawings.

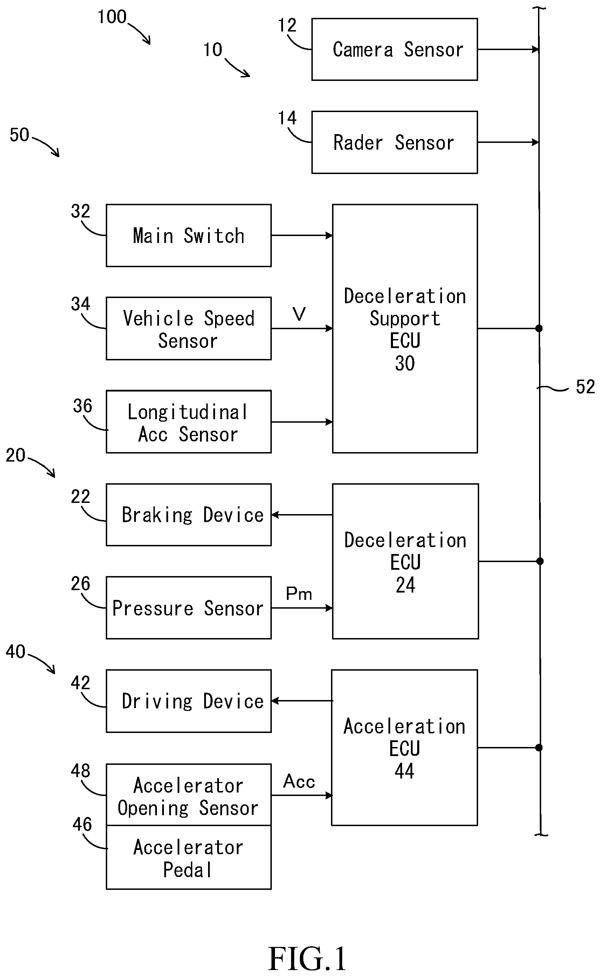

As shown in FIG. 1, a deceleration support device 100 according to the embodiment is applied to a vehicle 50, and includes an object detection device 10 that detects at least an object in front of the vehicle 50, a deceleration device 20 that decelerates the vehicle, and a deceleration support electronic control unit 30 that controls the deceleration device. Therefore, the vehicle 50 is equipped with the deceleration support device 100. A main switch 32, a vehicle speed sensor 34 and a longitudinal acceleration sensor 36 are connected to the electronic control unit 30.

The deceleration support device 100 operates when the main switch 32 is on. In the present application, "electronic control unit" is written as "ECU", which is an abbreviation for Electronic Control Unit.

The object detection device 10 includes camera sensors 12 and radar sensors 14 connected to a CAN (Controller Area Network) 52. Each camera sensor 12 includes a camera part and a recognition part that analyzes image data captured by the camera section and recognizes an object requiring deceleration of the vehicle 50. The camera part of each camera sensor 12 captures a scenery in front of the vehicle 50, and the recognition part of each camera sensor 12 repeatedly supplies the information regarding the recognized object requiring deceleration of the vehicle to the deceleration support ECU 30 every time a predetermined calculation period elapses.

In addition to the camera sensor 12 and the radar sensor 14, a navigation device may be used as an auxiliary detection device for detecting objects requiring deceleration of the vehicle. In the following description, "an object requiring deceleration of the vehicle" is written as "a deceleration object". Deceleration objects include, for example, stopped vehicles, pedestrians and bicycles moving on the side of a road, traffic lights, pedestrian crossings, road signs such as "slow driving", road signs such as "slow down", intersections, T-junctions, road curves, etc.

The radar sensor 14 has a radar transmitter/receiver and a signal processor (not shown). The radar transmitter/receiver emits radio waves in the millimeter wave band (hereinafter referred to as "millimeter waves"), and receives millimeter waves reflected by three-dimensional objects (for example, other vehicles, bicycles, guardrails, roadside structures, etc.) existing within the radiation range. The signal processing unit, based on a phase difference between the transmitted millimeter wave and the received reflected wave, an attenuation level of the reflected wave, and a time from when the millimeter wave is transmitted to when the reflected wave is received, the signal processing unit acquires every predetermined time a relative speed between the own vehicle and the three-dimensional object, a relative position (direction) of the three-dimensional object with respect to the own vehicle, and the like and supplies them to the deceleration support ECU 10. LiDAR (Light Detection And Ranging) may be used instead of the radar sensor 14.

The deceleration device 20 includes a braking device 22 that decelerates the vehicle 50 by applying braking force to wheels (not shown in FIG. 1) and a deceleration ECU 24 that controls the braking device 22. A pressure sensor 26 is connected to the deceleration ECU 24 to detect a master cylinder pressure Pm as a braking operation amount of the driver. The deceleration ECU 24 normally controls the braking device 22 based on the master cylinder pressure Pm.

As shown in FIG. 1, the vehicle 50 is equipped with an acceleration device 40. The acceleration device 40 includes a driving device 42 that accelerates the vehicle 50 by applying driving force to driving wheels (not shown in FIG. 1) and an acceleration ECU 44 that controls the driving device 42. An accelerator opening sensor 48 is connected to the acceleration ECU 44, and the accelerator opening sensor 48 detects operation amount of an accelerator pedal 46 to detect an accelerator opening Acc as a driving operation amount of the driver. The acceleration ECU 44 normally controls the driving device 42 based on the accelerator opening Acc.

Since the pressure sensor 26 and the accelerator opening sensor 46 respectively detect the braking operation and the driving operation by the driver, they function as a braking/driving operation detection device that detects the braking/driving operation (braking operation and driving operation) by the driver and constitutes a part of the deceleration support device 100. A brake lamp switch may be employed instead of the pressure sensor 26 as a braking operation detection device that detects a braking operation by the driver.

The driving device 42 can be any driving device known in the art that includes a combination of an internal combustion engine such as a gasoline engine and a transmission, a so-called hybrid system that is a combination of an internal combustion engine and a motor, a so-called plug-in hybrid system, a combination of a fuel cell and a motor, and a motor.

The deceleration support ECU 30, the deceleration ECU 24, and the acceleration ECU 44 are electronic control units having a microcomputer as a main part, and are connected via the CAN 52 so as to be able to transmit and receive information to each other. Each microcomputer includes a CPU, ROM, RAM, non-volatile memory and interface. The CPU implements various functions by executing instructions (programs, routines) stored in the ROM. Some or all of these ECUs may be integrated into one ECU.

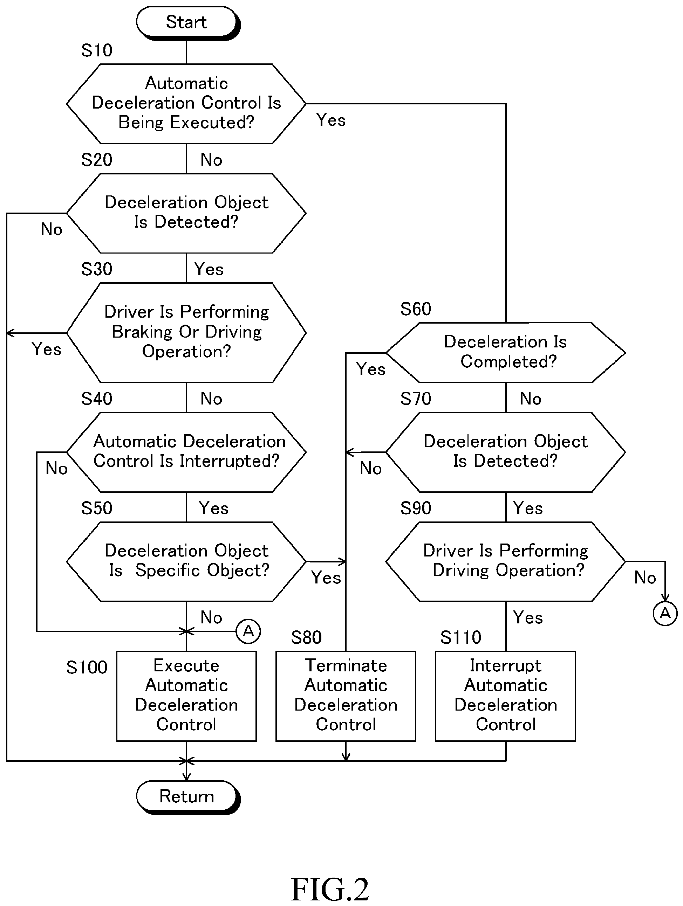

In particular, the ROM of the deceleration support ECU 30 stores a deceleration support control program corresponding to the flowchart shown in FIG. 2, and the CPU executes deceleration support control according to the program.

As will be described later in detail, the deceleration assist ECU 30 executes automatic deceleration control that automatically decelerates the vehicle 50 when the deceleration object is detected by the detection device 10 and the braking/driving operation by the driver is not detected by the pressure sensor 26 and the accelerator opening sensor 48. On the other hand, the deceleration support ECU 30 do not perform automatic deceleration control when, even if the deceleration object is detected by the detection device 10, the braking or driving operation by the driver is detected by the pressure sensor 26 and the accelerator opening sensor 48.

Note that the automatic deceleration control is control for automatically decelerating the vehicle 50 by controlling the deceleration device 20 to automatically apply braking force to the wheels without requiring a braking operation by the driver. Furthermore, the automatic deceleration control is executed by outputting an execution command of the automatic deceleration control from the deceleration support ECU 30 to the deceleration ECU 24.

Also, an object that is to be decelerated and that does not prevent the vehicle from passing through a position of an object (that is, can pass without causing a collision) is defined as a "specific object". Specific objects are, for example, traffic lights, pedestrian crossings, road signs, road surface signs, intersections, T-junctions, road curves, and the like.

The deceleration support ECU 30 interrupts the automatic deceleration control when the accelerator opening sensor 48 detects a driving operation while the automatic deceleration control is being executed. Furthermore, the deceleration support ECU 30 resumes the automatic deceleration control if it is determined that the deceleration object is not a specific object when the accelerator opening sensor 48 no longer detects the drive operation in a situation where the automatic deceleration control is interrupted. However, when it is determined that the deceleration object is a specific object, the automatic deceleration control is terminated without resuming the control.

### <Deceleration support control routine>

Next, the deceleration support control routine in the embodiment will be described with reference to the flowchart shown in FIG. 2. The deceleration support control according to the flowchart shown in FIG. 2 is repeatedly executed by the CPU of the deceleration support ECU 30 at a predetermined control cycle when the main switch 32 is on. The deceleration support control is simply referred to as "the present control" in the following description.

First, in step S10, the CPU determines whether or not the automatic deceleration control is being executed. When the CPU makes an affirmative determination, the present control proceeds to step S60, and when it makes a negative determination, the present control proceeds to step S20. It should be noted that when the automatic deceleration control is being executed, a display to that effect may be displayed on a display device not shown in FIG. 1.

In step S20, the CPU determines whether or not the camera sensor 12 and/or the radar sensor 14 have detected a deceleration object. When the CPU makes a negative determination, it once terminates the present control, and when it makes an affirmative determination, it advances the present control to step S30. Note that when the deceleration object is detected, a display to that effect may be displayed on a display device not shown in FIG. 1.

In step S30, the CPU determines whether or not the driver is performing a braking operation or a driving operation. When the CPU makes an affirmative determination, it once terminates the present control, and when it makes a negative determination, that is, when the driver does not perform a braking/driving operation, the present control proceeds to step S40. Incidentally, when the master cylinder pressure Pm detected by the pressure sensor 26 is equal to or higher than a reference value, it may be determined that the driver is performing the braking operation. Further, when the accelerator opening Acc detected by the accelerator opening sensor 46 is equal to or greater than a reference value, it may be determined that the driving operation is being performed by the driver.

In step S40, the CPU determines whether or not the automatic deceleration control is interrupted. When the CPU makes a negative determination, it advances the present control to step S100, and when it makes an affirmative judgment, it advances the present control to step S50. Incidentally, when the automatic deceleration control is interrupted, a display to that effect may be displayed on a display device not shown in FIG 1.

In step S50, the CPU determines whether or not the detected deceleration object is a specific object. When the CPU makes an affirmative determination, the present control proceeds to step S80, and when it makes a negative determination, the present control proceeds to step S100. Note that when the deceleration object is a specific object, that effect may be displayed on a display device not shown in FIG. 1.

When a plurality of deceleration objects is detected, the CPU makes a negative determination if the plurality of deceleration objects includes objects that are not specific objects, and makes an affirmative determination if all of the plurality of deceleration objects are specific objects.

In step S60, the CPU determines whether or not the condition for terminating the automatic deceleration control is satisfied, that is, whether or not the deceleration is completed. When the CPU makes an affirmative determination, the present control proceeds to step S80, and when it makes a negative determination, the present control proceeds to step S70.

For example, when the deceleration object is a preceding vehicle, it is determined that the condition for terminating the automatic deceleration control is satisfied when the relative speed of the own vehicle 50 to the preceding vehicle is 0 km/h or less, and the relative distance between the preceding vehicle and the own vehicle becomes equal to or greater than a reference relative distance that is determined according to the vehicle speed V. When the deceleration object is a road sign such as a red light or a stop line, it is determined that the termination condition of the automatic deceleration control is satisfied when the vehicle speed V of the vehicle 50 at or in front of the stop line becomes 0 km/h. When the deceleration object is an intersection, T-junction, or the like, it is determined that the condition for terminating the automatic deceleration control is satisfied when the vehicle speed V at the position immediately before the intersection, T-junction, or the like reaches a predetermined speed. Furthermore, when the deceleration object is a curved road, it is determined that the condition for terminating the automatic deceleration control is satisfied when the magnitude of a lateral acceleration of the vehicle 50 during travel on the curve becomes equal to or less than a predetermined value.

In step S70, as in step S20, the CPU determines whether or not the camera sensor 12 and/or the radar sensor 14 have detected a deceleration object. When the CPU makes a negative determination, it advances the present control to step S80, and when it makes an affirmative judgment, it advances the present control to step S90. Also in this step, when a deceleration object is detected, a display to that effect may be displayed on a display device not shown in FIG. 1.

In step S80, the CPU terminates the automatic deceleration control by outputting a command to terminate the automatic deceleration control to the deceleration ECU 24. Therefore, the automatic deceleration of the vehicle 50 is terminated when the braking force is no longer applied to the wheels.

In step S90, the CPU determines whether the driving operation is being performed by the driver. When the CPU makes a negative determination, it advances the present control to step S100, and when it makes an affirmative determination, it advances the present control to step S110.

In step S100, the CPU executes automatic deceleration control to control the braking device 22 so that the vehicle 50 automatically decelerates by outputting a command to execute the automatic deceleration control to the deceleration ECU 24. The automatic deceleration control may be performed in any manner known in the art. Note that when a plurality of deceleration objects are detected, the automatic deceleration control may be executed based on a deceleration object with the highest priority.

For example, when the deceleration object is a preceding vehicle, the own vehicle is automatically decelerated so that the relative speed of the own vehicle 50 to the preceding vehicle is 0 km/h or less, and the relative distance between the preceding vehicle and the own vehicle becomes equal to or greater than the reference relative distance that is determined according to the vehicle speed V. When the deceleration object is a red light, a temporary stop, or the like, the own vehicle 50 is automatically decelerated so that the vehicle speed V of the own vehicle at the stop line position becomes 0 km/h. When the deceleration object is an intersection, T-junction, etc., the vehicle 50 is automatically decelerated so that the vehicle speed V of then vehicle immediately before the intersection, T-junction, etc. becomes a predetermined speed. Furthermore, when the deceleration object is a curve of a road, the vehicle 50 is automatically decelerated so that the magnitude of the lateral acceleration of the vehicle while traveling on the curve is less than or equal to a predetermined value.

In step S110, the CPU interrupts the automatic deceleration control by outputting a command to interrupt the automatic deceleration control to the deceleration ECU 24. Therefore, the automatic deceleration of the vehicle 50 is interrupted by the braking force being no longer applied to the wheels. Also in this step, when the automatic deceleration control is interrupted, a display to that effect may be displayed on a display device not shown in FIG. 1.

### <Operation of Embodiment>

Next, the operation of the embodiment will be described for various cases which, although a deceleration object is detected, are different in whether or not automatic deceleration control is being executed or interrupted, whether or not the deceleration object is a specific object, and whether or not a driver is performing a braking/driving operation.

### <A: When automatic deceleration control is not being executed and not during interruption of automatic deceleration control>

### <A1: When a deceleration object is detected and no braking/driving operation is performed>

In steps S10, S20, and S30, a negative, an affirmative and a negative determinations are made, respectively. Since the automatic deceleration control is not interrupted, a negative determination is made in step S40, and the automatic deceleration control is executed in step S100. Therefore, the vehicle 50 is automatically decelerated regardless of whether the deceleration object is a specific object.

### <A2: When a deceleration object is detected, but a braking/driving operation is being performed>

A negative and an affirmative determinations are made in steps S10 and S20, respectively, and an affirmative determination is made in step S30. Therefore, since step S100 is not executed, the automatic deceleration control is not executed. Accordingly, the vehicle 50 is decelerated and accelerated according to the braking/driving operation by the driver.

### <B: When the automatic deceleration control is interrupted, a deceleration object is detected, and a braking/driving operation is not performed>

### <B1: When the deceleration object is not a specific object>

In steps S10, S20, and S30, a negative, an affirmative and a negative determinations are made, respectively. Since the automatic deceleration control is interrupted, an affirmative determination is made in step S40. However, since the deceleration object is not a specific object, a negative determination is made in step S50. Therefore, in step S100, the automatic deceleration control is resumed and the vehicle 50 is automatically decelerated.

As will be described later, the automatic deceleration control is interrupted when the driver performs a drive operation in a situation where a deceleration object that is not a specific object is detected (C4). Furthermore, when the driver stops performing the driving operation in a situation where the automatic deceleration control is interrupted, since the deceleration object is not a specific object, the automatic deceleration control is resumed.

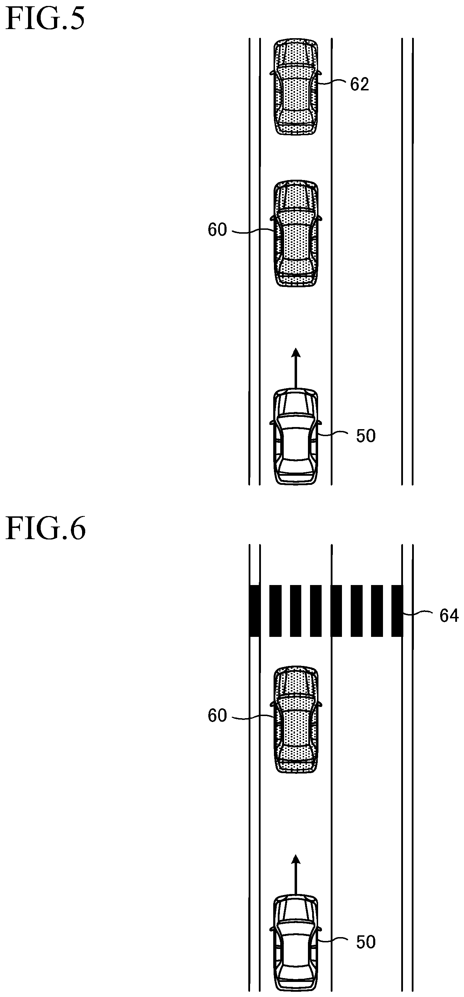

For example, FIG. 5 shows a situation in which the automatic deceleration control of the own vehicle 50 is interrupted and the own vehicle 50 is approaching other vehicles 60 and 62 stopped ahead due to traffic congestion. Since the other vehicles 60 and 62 are not specific objects, the automatic deceleration control is resumed when the driving operation is stopped by the driver.

In FIG. 5, the deceleration objects are other vehicles 60 and 62 that are not specific objects. However, as shown in FIG. 6, there are a plurality of deceleration objects such as another vehicle 60 which is not a specific deceleration object and a specific object such as a pedestrian crossing 64. The automatic deceleration control is resumed even when an object other than a specific object is included.

### <B2: When the deceleration object is a specific object>

As in the above case B1, a negative, an affirmative, and a negative determinations are made in steps S10, S20, and S30, respectively, and an affirmative determination is made in step S40. Since the deceleration object is a specific object, an affirmative determination is made in step S50, and the automatic deceleration control is terminated without being resumed in step S80. Therefore, the vehicle 50 is not automatically decelerated against a will of the driver.

For example, the deceleration object is a specific object, so that the automatic deceleration control is terminated when the driving operation is no longer performed by the driver in a situation where the automatic deceleration control is interrupted (C4).

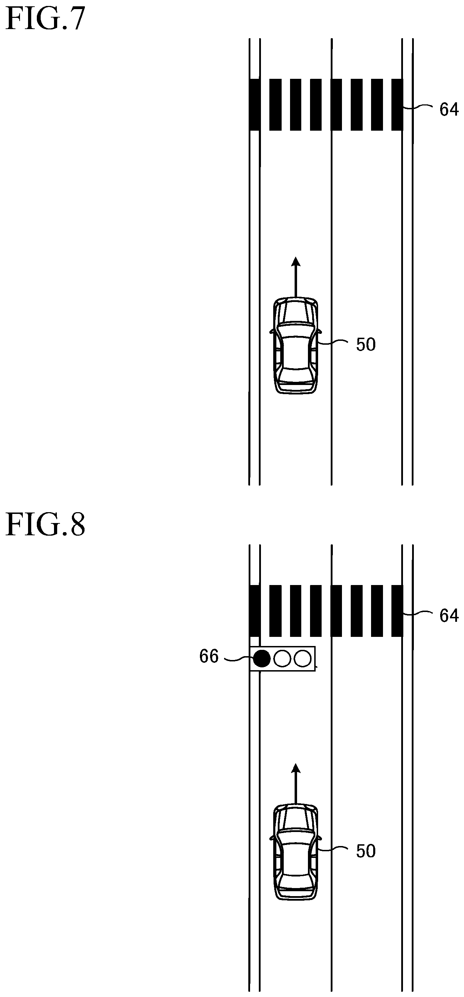

FIG. 7 shows a situation in which the automatic deceleration control of the own vehicle 50 is interrupted and the own vehicle 50 is approaching a pedestrian crossing 64 in front of it. Since the pedestrian crossing is a specific object, the automatic deceleration control is terminated when the driving operation is stopped by the driver.

In addition, in FIG. 7, the deceleration object is one specific object. However, the automatic deceleration control is terminated when, as shown in FIG. 8, there are a plurality of deceleration objects, such as a pedestrian crossing 64 and a traffic light 66, and all of these deceleration objects are specific objects.

<C: When the automatic deceleration control is executed>

### <C1: When the automatic deceleration control is completed>

Affirmative determinations are made in steps S10 and S60. Therefore, in step S80, the automatic deceleration control is terminated.

### <C2: When the automatic deceleration control is not completed and no deceleration object is detected>

An affirmative and a negative determinations are made in steps S10 and S60, respectively, and since no deceleration object has been detected, a negative determination is made in step S70. Therefore, the automatic deceleration control is terminated in step S80, as in the case C1.

### <C3: When the automatic deceleration control is not completed, a deceleration object is detected, and the driving operation is not performed>

In steps S10, S60 and S70, an affirmative, a negative and an affirmative determinations are made, respectively. Since no driving operation is performed, a negative determination is made in step S90, and the automatic deceleration control is executed in step S100.

### <C4: When the automatic deceleration control is not completed, a deceleration object is detected, and the driving operation is being performed>

In steps S10, S60 and S70, an affirmative, a negative and an affirmative determinations are made, respectively. Since the driving operation is being performed, an affirmative determination is made in step S90. Therefore, the automatic deceleration control is interrupted in step S110. Accordingly, the vehicle 50 is not automatically decelerated against a will of the driver.

### [Modified example]

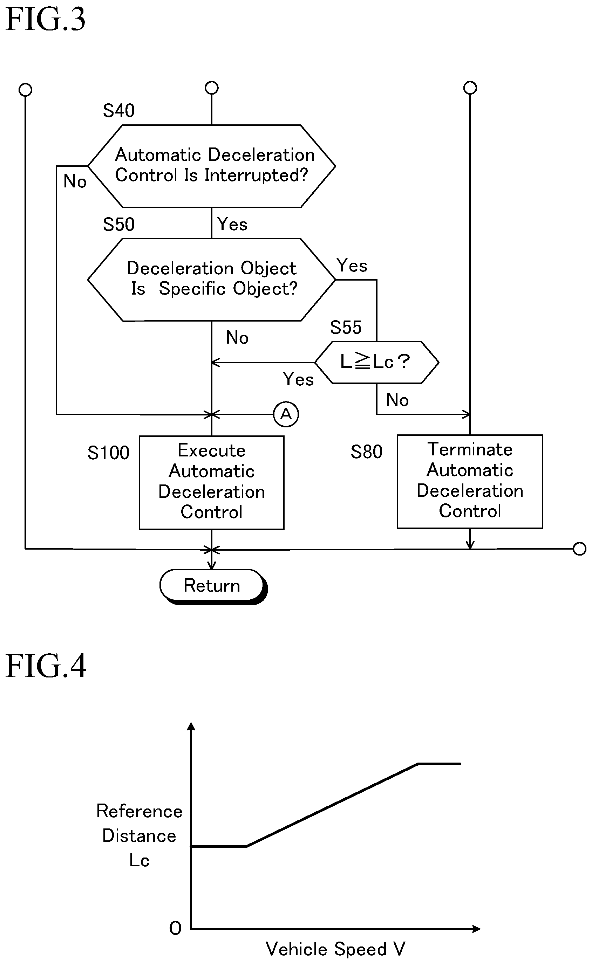

FIG. 3 is a flow chart showing a main part of the deceleration support control routine in the modified example. In FIG. 3, steps that are the same as the steps shown in FIG. 2 are given the same step numbers as the step numbers given in FIG. 2.

In the modified example, when the CPU makes a negative determination in step 50, the present control proceeds to step S100, and when it makes an affirmative determination, the present control proceeds to step S55.

In step S55, the CPU refers to the map shown in FIG. 4 based on a vehicle speed V to calculate a reference distance Lc. As shown in FIG. 4, the reference distance Lc is variably set according to the vehicle speed V so that it increases as the vehicle speed V increases.

Further, in step S55, the CPU determines whether or not a distance L from the vehicle 50 to the deceleration object (specific object) is greater than or equal to the reference distance Lc. When the CPU makes a negative determination, it advances the present control to step S80 and terminates the automatic deceleration control without resuming it. On the other hand, when the CPU makes an affirmative determination, the present control proceeds to step S100, and the automatic deceleration control is resumed. Therefore, even if the specific object is detected in a situation where the automatic deceleration control is interrupted, the automatic deceleration control can be executed when the distance L from the vehicle 50 to the specific object is equal to or greater than the reference distance Lc. Note that when there is a plurality of specific objects, the distance L is the distance from the vehicle 50 to the specific object closest to the vehicle.

As can be seen from the above description, according to the embodiment and the modified example, when the driving operation is no longer detected by the accelerator opening sensor 46 (S30) in a situation where the automatic deceleration control is interrupted (S40), the automatic deceleration control is resumed (S100) when it is determined that the deceleration object is not a specific object (S50), but the automatic deceleration control is terminated without being resumed0 (S80) when it is determined that the deceleration object is a specific object (S50).

Therefore, when the driving operation is no longer detected and it is determined that the deceleration object is not a specific object, the automatic deceleration control is resumed and executed. Accordingly, it is possible to decelerate the vehicle by the automatic deceleration control and prevent the vehicle from colliding with the object. On the other hand, when the driving operation is no longer detected and it is determined that the deceleration object is a specific object, the automatic deceleration control is terminated without being resumed. As a result, it is possible to prevent the driver from feeling annoyed by the resumption of an automatic deceleration. Also in the latter case, the driver can accelerate and decelerate the vehicle by braking and driving based on his/her own intention.

Further, according to the embodiment and the modified example, when the driving operation is no longer detected in a situation where the object detection device 10 detects a plurality of objects requiring deceleration of the vehicle and the automatic deceleration control is interrupted, the automatic deceleration control is resumed when it is determined that the plurality of objects include an object that is not a specific object, but the automatic deceleration control is not resumed when all of the plurality of objects is determined to be specific objects.

Therefore, when the plurality of objects includes a non-specific object, the automatic deceleration control is resumed, so that the vehicle is decelerated by the automatic deceleration control, and the vehicle can be prevented from colliding with the non-specific object. On the other hand, when all of the plurality of objects is specific objects, the automatic deceleration control is not resumed. Therefore, it is possible to prevent the driver from feeling annoyed by the resumption of an automatic deceleration.

Further, according to the embodiment and modified example, objects that exist in a stationary state on a road, such as a vehicles stopped on a road, a fallen objects on a road, a fallen tree, etc., are prevented from being determined as specific objects even if the objects are not displaced from the road on which the vehicle is traveling.

Furthermore, according to the embodiment and the modified example, when the driving operation is no longer detected by the braking/driving operation detection device (S30) in a situation where the automatic deceleration control is interrupted (S40), the automatic deceleration control is resumed (S100) when it is determined that the object is not the specific object (S50). Therefore, it is possible to decelerate the vehicle by the automatic deceleration control and prevent the vehicle from colliding with a non-specific object.

Further, when the driving operation is no longer detected by the braking/driving operation detection device (S30) in a situation where the automatic deceleration control is interrupted (S40), if the object is determined to be a specific object ( S50), the automatic deceleration control is terminated without being resumed (S80). Therefore, it is possible to prevent the driver from feeling annoyed by the resumption of an automatic deceleration.

Furthermore, according to the modified example, when it is determined that a distance L from the vehicle to the deceleration object is greater than or equal to the reference distance Lc (S55) in a situation where it is determined that the deceleration object is a specific object (S50), the automatic deceleration control is resumed (S100). When a distance from the vehicle to the deceleration object is greater than or equal to the reference distance and the driver is not performing drive operation in a situation where the automatic deceleration control is interrupted and a specific object is detected, the driver does not feel annoyed by the resumption of an automatic deceleration even when the automatic deceleration control is resumed.

In particular, when the driver releases the driving operation after performing the driving operation once in a situation where a distance L from the vehicle 50 to the deceleration object is large, it is difficult to determine whether the driving operation was performed to prevent the automatic deceleration control from starting, or whether it was performed for some other purpose. Therefore, it is preferable that the automatic deceleration control is resumed.

On the other hand, when it is determined that a distance L from the vehicle to the deceleration object is less than the reference distance Lc (S55 ) in a situation where a specific object is detected and the driving operation is not detected (S30, S50), the automatic deceleration control is terminated. Therefore, it is possible to prevent the driver from feeling annoyed by the resumption of an automatic deceleration.

Furthermore, according to the embodiment and the modified example, when a specific object is detected and the driving operation is not detected (S30, S50) in a situation where the automatic deceleration control is interrupted (S40), the automatic deceleration control is terminated (S80). Therefore, when a specific object is detected and the driver does not perform driving operation, it is possible to prevent the automatic deceleration control from being resumed and prevent the driver from feeling annoyed by the resumption of an automatic deceleration.

Furthermore, according to the modified example, the reference distance Lc is variably set according to a vehicle speed V of the vehicle 50 so that it increases as the vehicle speed increases (S55). Therefore, in a situation where the deceleration object is determined to be a specific object, it is possible to properly determine whether or not the automatic deceleration control should be executed regardless of the vehicle speed.

Although the present invention has been described in detail with reference to specific embodiments, it will be apparent to those skilled in the art that the present invention is not limited to the above-described embodiments, and various other embodiments are possible within the scope of the present invention as defined by the appended claims.

For example, in the above-described embodiment and modified example, it is determined that the driver is performing a driving operation when the accelerator opening Acc detected by the accelerator opening sensor 48 is equal to or greater than the reference value. However, the accelerator pedal 46 may be provided with a switch that turns on when the driver operates the accelerator pedal, and it may be determined that the driving operation is being performed by the driver when the switch is on.

In the modified example described above, the reference distance Lc is variably set according to a vehicle speed V of the vehicle 50 so that the higher the vehicle speed is, the larger the reference distance Lc is, but it may be a constant value.

## Claims

1. A deceleration support device (110) that comprises an object detection device (10) that is configured to detect an object at least in front of a vehicle (50), a braking/driving operation detection device (26, 48) that detects a braking/driving operation by a driver, a speed reduction device (20) that decelerates the vehicle, and an electronic control unit (24, 30) that controls the speed reduction device; the electronic control unit is configured to control the speed reduction device to execute automatic deceleration control for automatically decelerating the vehicle when the object detection device detects an object that requires deceleration of the vehicle and the braking/driving operation detection device does not detect a braking/driving operation, and interrupt the automatic deceleration control when a driving operation is detected by the braking/driving operation detection device in a situation where the automatic deceleration control is being executed, **characterized in that**
with an object that requires deceleration of the vehicle (50) and that does not prevent the vehicle from passing through a position of the object being defined as a specific object, the electronic control unit (24, 30) is configured to resume the automatic deceleration control if the electronic control unit determines that the object is not a specific object, but is configured not to resume the automatic deceleration control if the electronic control unit determines that the object is a specific object, when the driving operation is no longer detected by the braking/driving operation detection device (26, 48) in a situation where the automatic deceleration control is interrupted; and **in that** the electronic control unit (24, 30) is configured, when the driving operation is no longer detected by the braking/driving operation detection device (26, 48) in a situation where the object detection device (10) detects a plurality of objects requiring deceleration of the vehicle (50) and the automatic deceleration control is interrupted, to resume the automatic deceleration control if the electronic control unit determines that the plurality of objects include an object other than the specific object, but not to resume the automatic deceleration control if the electronic control unit determines that all of the plurality of objects are the specific objects.

2. The deceleration support device (100) according to claim 1, wherein the specific object is an object that does not displace with respect to a road on which the vehicle (50) travels and that the vehicle can pass through without colliding.

3. The deceleration support device (100) according to any one of claims 1 to 2, wherein the electronic control unit (24, 30) is configured to resume the automatic deceleration control if the electronic control unit determines that the object is not a specific object, but terminate the automatic deceleration control if the electronic control unit determines that the object is a specific object, when the driving operation is no longer detected by the braking/driving operation detection device (26, 48) in a situation where the automatic deceleration control is interrupted.

4. The deceleration support device (100) according to claim 3, wherein the electronic control unit (24, 30) is configured to resume the automatic deceleration control if the electronic control unit determines that a distance (L) from the vehicle to the object is equal to or greater than a reference distance (Lc), but terminate the automatic deceleration control if the electronic control unit determines that the distance from the vehicle to the object is less than the reference distance, when the electronic control unit determines that the object is a specific object.

5. The deceleration support device (100) according to claim 4, wherein the electronic control unit (24, 30) is configured to variably set the reference distance (Lc) according to a vehicle speed (V) so that the reference distance increases as the vehicle speed increases.

6. A deceleration support method that comprises a step of executing an automatic deceleration control that automatically decelerates a vehicle (50) when an object requiring deceleration of the vehicle is detected by an object detection device (10) that is configured to detect an object at least in front of the vehicle and a braking/driving operation is not detected by a braking/driving operation detection (26, 48) device that detects a braking/driving operation by a driver, and a step of interrupting the automatic deceleration control when the driving operation is detected by the braking/driving operation detection device while the automatic deceleration control is being executed, **characterized in that**
with an object that requires deceleration of the vehicle and that does not prevent the vehicle from passing through a position of the object being defined as a specific object, the deceleration support method further comprises a step of resuming the automatic deceleration control if it is determined that the object is not a specific object, but not resuming the automatic deceleration control if it is determined that the object is a specific object, when the driving operation is no longer detected by the braking/driving operation detection device in a situation where the automatic deceleration control is interrupted; and
**in that** when the driving operation is no longer detected by the braking/driving operation detection device (26, 48) in a situation where the object detection device (10) detects a plurality of objects requiring deceleration of the vehicle (50) and the automatic deceleration control is interrupted, the deceleration support method resumes the automatic deceleration control if the electronic control unit determines that the plurality of objects include an object other than the specific object, but the deceleration support method does not resume the automatic deceleration control if the electronic control unit determines that all of the plurality of objects are the specific objects.

7. A deceleration support program that comprises a step of executing an automatic deceleration control that automatically decelerates a vehicle (50) when an object requiring deceleration of the vehicle is detected by an object detection device (10) that is configured to detect an object at least in front of the vehicle and a braking/driving operation is not detected by a braking/driving operation detection (26, 48) device that detects a braking/driving operation by a driver, and a step of interrupting the automatic deceleration control when the driving operation is detected by the braking/driving operation detection device while the automatic deceleration control is being executed, **characterized in that**
with an object that requires deceleration of the vehicle and that does not prevent the vehicle from passing through a position of the object being defined as a specific object, the deceleration support program further comprises a step of resuming the automatic deceleration control if it is determined that the object is not a specific object, but not resuming the automatic deceleration control if it is determined that the object is a specific object, when the driving operation is no longer detected by the braking/driving operation detection device in a situation where the automatic deceleration control is interrupted; and
**in that** when the driving operation is no longer detected by the braking/driving operation detection device (26, 48) in a situation where the object detection device (10) detects a plurality of objects requiring deceleration of the vehicle (50) and the automatic deceleration control is interrupted, the deceleration support program comprises a step of to resuming the automatic deceleration control if the electronic control unit determines that the plurality of objects include an object other than the specific object, but the deceleration support program comprises a step of not resuming the automatic deceleration control if the electronic control unit determines that all of the plurality of objects are the specific objects.

8. A vehicle comprising the deceleration support device according to any one of claims 1 to 5.

## Patentansprüche

1. Verlangsamungsunterstützungsvorrichtung (110), die eine Objekterfassungsvorrichtung (10), die dazu konfiguriert ist, ein Objekt wenigstens vor einem Fahrzeug (50) zu erfassen, eine Brems-/Fahrvorgangserfassungsvorrichtung (26, 48), die einen Brems-/Fahrvorgang durch einen Fahrer erfasst, eine Geschwindigkeitsreduzierungsvorrichtung (20), die das Fahrzeug verlangsamt, und eine elektronische Steuereinheit (24, 30) umfasst, die die Geschwindigkeitsreduzierungsvorrichtung steuert; wobei die elektronische Steuereinheit dazu konfiguriert ist, die Geschwindigkeitsreduzierungsvorrichtung zu steuern, um eine automatische Verlangsamungssteuerung zum automatischen Verlangsamen des Fahrzeugs auszuführen, wenn die Objekterfassungsvorrichtung ein Objekt erfasst, das eine Verlangsamung des Fahrzeugs erfordert, und die Brems-/Fahrvorgangserfassungsvorrichtung keinen Brems-/Fahrvorgang erfasst, und die automatische Verlangsamungssteuerung zu unterbrechen, wenn ein Fahrvorgang von der Brems-/Fahrvorgangserfassungsvorrichtung in einer Situation erfasst wird, in der die automatische Verlangsamungssteuerung ausgeführt wird, **dadurch gekennzeichnet, dass**
bei einem Objekt, das eine Verlangsamung des Fahrzeugs (50) erfordert und das das Fahrzeug nicht daran hindert, eine Position des Objekts zu passieren, das als ein spezifisches Objekt definiert ist, die elektronische Steuereinheit (24, 30) dazu konfiguriert ist, die automatische Verlangsamungssteuerung wieder aufzunehmen, wenn die elektronische Steuereinheit bestimmt, dass das Objekt kein spezifisches Objekt ist, jedoch dazu konfiguriert ist, die automatische Verlangsamungssteuerung nicht wieder aufzunehmen, wenn die elektronische Steuereinheit bestimmt, dass das Objekt ein spezifisches Objekt ist, wenn der Fahrvorgang von der Brems-/Fahrvorgangserfassungsvorrichtung (26, 48) in einer Situation, in der die automatische Verlangsamungssteuerung unterbrochen ist, nicht mehr erfasst wird; und dass die elektronische Steuereinheit (24, 30) dazu konfiguriert ist, wenn der Fahrvorgang durch die Brems-/Fahrvorgangerfassungsvorrichtung (26, 48) in einer Situation nicht mehr erfasst wird, in der die Objekterfassungsvorrichtung (10) eine Mehrzahl von Objekten erfasst, die eine Verlangsamung des Fahrzeugs (50) erfordern und die automatische Verlangsamungssteuerung unterbrochen ist, die automatische Verlangsamungssteuerung wieder aufzunehmen, wenn die elektronische Steuereinheit bestimmt, dass die Mehrzahl von Objekten ein anderes Objekt als das spezifische Objekt beinhaltet, jedoch die automatische Verlangsamungssteuerung nicht wieder aufzunehmen, wenn die elektronische Steuereinheit bestimmt, dass alle der Mehrzahl von Objekten die spezifischen Objekte sind.

2. Verlangsamungsunterstützungsvorrichtung (100) nach Anspruch 1, wobei das spezifische Objekt ein Objekt ist, das sich in Bezug auf eine Straße, auf der das Fahrzeug (50) fährt, nicht verschiebt und das das Fahrzeug ohne Kollision passieren kann.

3. Verlangsamungsunterstützungsvorrichtung (100) nach einem der Ansprüche 1 bis 2, wobei die elektronische Steuereinheit (24, 30) dazu konfiguriert ist, die automatische Verlangsamungssteuerung wieder aufzunehmen, wenn die elektronische Steuereinheit bestimmt, dass das Objekt kein spezifisches Objekt ist, die automatische Verlangsamungssteuerung jedoch zu beenden, wenn die elektronische Steuervorrichtung bestimmt, dass das Objekt ein spezifisches Objekt ist, wenn der Fahrvorgang nicht mehr von der Brems-/Fahrvorgangserfassungsvorrichtung (26, 48) in einer Situation erfasst wird, in der die automatische Verlangsamungssteuerung unterbrochen ist.

4. Verlangsamungsunterstützungsvorrichtung (100) nach Anspruch 3, wobei die elektronische Steuervorrichtung (24, 30) dazu konfiguriert ist, die automatische Verlangsamungssteuerung wieder aufzunehmen, wenn die elektronische Steuervorrichtung bestimmt, dass ein Abstand (L) von dem Fahrzeug zu dem Objekt gleich oder größer als ein Referenzabstand (Lc) ist, die automatische Verlangsamungssteuerung jedoch zu beenden, wenn die elektronische Steuereinheit bestimmt, dass der Abstand von dem Fahrzeug zu dem Objekt kleiner als der Referenzabstand ist, wenn die elektronische Steuereinheit bestimmt, dass das Objekt ein spezifisches Objekt ist.

5. Verlangsamungsunterstützungsvorrichtung (100) nach Anspruch 4, wobei die elektronische Steuervorrichtung (24, 30) dazu konfiguriert ist, den Referenzabstand (Lc) gemäß einer Fahrzeuggeschwindigkeit (V) variabel einzustellen, sodass der Referenzabstand mit zunehmender Fahrzeuggeschwindigkeit zunimmt.

6. Verfahren für die Verlangsamungsunterstützung, umfassend einen Schritt des Ausführens einer automatischen Verlangsamungssteuerung, die ein Fahrzeug (50) automatisch verlangsamt, wenn ein Objekt, das eine Verlangsamung des Fahrzeugs erfordert, von einer Objekterfassungsvorrichtung (10) erfasst wird, die dazu konfiguriert ist, ein Objekt wenigstens vor dem Fahrzeug zu erfassen, und ein Brems-/Fahrvorgang nicht von einer Brems-/Fahrvorgangserfassungs(26, 48)vorrichtung erfasst wird, die einen Brems-/Fahrvorgang durch einen Fahrer erfasst, und einen Schritt des Unterbrechens der automatischen Verlangsamungssteuerung, wenn der Fahrvorgang von der Brems-/Fahrvorgangserfassungsvorrichtung erfasst wird, während die automatische Verlangsamungssteuerung ausgeführt wird, **dadurch gekennzeichnet, dass**
bei einem Objekt, das eine Verlangsamung des Fahrzeugs erfordert und das das Fahrzeug nicht daran hindert, eine Position des Objekts zu passieren, das als ein spezifisches Objekt definiert ist, das Verfahren für die Verlangsamungsunterstützung ferner einen Schritt des Wiederaufnehmens der automatischen Verlangsamungssteuerung, wenn bestimmt wird, dass das Objekt kein spezifisches Objekt ist, jedoch des Nichtwiederaufnehmens der automatischen Verlangsamungssteuerung umfasst, wenn bestimmt wird, dass das Objekt ein spezifisches Objekt ist, wenn der Fahrvorgang von der Brems-/Fahrvorgangserfassungsvorrichtung in einer Situation, in der die automatische Verlangsamungssteuerung unterbrochen ist, nicht mehr erfasst wird; und
dass, wenn der Fahrvorgang durch die Brems-/Fahrvorgangerfassungsvorrichtung (26, 48) in einer Situation nicht mehr erfasst wird, in der die Objekterfassungsvorrichtung (10) eine Mehrzahl von Objekten erfasst, die eine Verlangsamung des Fahrzeugs (50) erfordern und die automatische Verlangsamungssteuerung unterbrochen ist, das Verfahren für die Verlangsamungsunterstützung die automatische Verlangsamungssteuerung wieder aufnimmt, wenn die elektronische Steuereinheit bestimmt, dass die Mehrzahl von Objekten ein anderes Objekt als das spezifische Objekt beinhaltet, jedoch das Verfahren für die Verlangsamungsunterstützung die automatische Verlangsamungssteuerung nicht wieder aufnimmt, wenn die elektronische Steuereinheit bestimmt, dass alle der Mehrzahl von Objekten die spezifischen Objekte sind.

7. Programm für die Verlangsamungsunterstützung, umfassend einen Schritt des Ausführens einer automatischen Verlangsamungssteuerung, die ein Fahrzeug (50) automatisch verlangsamt, wenn ein Objekt, das eine Verlangsamung des Fahrzeugs erfordert, von einer Objekterfassungsvorrichtung (10) erfasst wird, die dazu konfiguriert ist, ein Objekt wenigstens vor dem Fahrzeug zu erfassen, und ein Brems-/Fahrvorgang nicht von einer Brems-/Fahrvorgangserfassungs(26, 48)vorrichtung erfasst wird, die einen Brems-/Fahrvorgang durch einen Fahrer erfasst, und einen Schritt des Unterbrechens der automatischen Verlangsamungssteuerung, wenn der Fahrvorgang von der Brems-/Fahrvorgangserfassungsvorrichtung erfasst wird, während die automatische Verlangsamungssteuerung ausgeführt wird, **dadurch gekennzeichnet, dass**
bei einem Objekt, das eine Verlangsamung des Fahrzeugs erfordert und das das Fahrzeug nicht daran hindert, eine Position des Objekts zu passieren, das als ein spezifisches Objekt definiert ist, das Programm für die Verlangsamungsunterstützung ferner einen Schritt des Wiederaufnehmens der automatischen Verlangsamungssteuerung, wenn bestimmt wird, dass das Objekt kein spezifisches Objekt ist, jedoch des Nichtwiederaufnehmens der automatischen Verlangsamungssteuerung umfasst, wenn bestimmt wird, dass das Objekt ein spezifisches Objekt ist, wenn der Fahrvorgang von der Brems-/Fahrvorgangserfassungsvorrichtung in einer Situation, in der die automatische Verlangsamungssteuerung unterbrochen ist, nicht mehr erfasst wird; und
dass, wenn der Fahrvorgang durch die Brems-/Fahrvorgangerfassungsvorrichtung (26, 48) in einer Situation nicht mehr erfasst wird, in der die Objekterfassungsvorrichtung (10) eine Mehrzahl von Objekten erfasst, die eine Verlangsamung des Fahrzeugs (50) erfordern und die automatische Verlangsamungssteuerung unterbrochen ist, das Programm für die Verlangsamungsunterstützung einen Schritt des Wiederaufnehmens der automatischen Verlangsamungssteuerung umfasst, wenn die elektronische Steuereinheit bestimmt, dass die Mehrzahl von Objekten ein anderes Objekt als das spezifische Objekt beinhaltet, jedoch das Programm für die Verlangsamungsunterstützung einen Schritt des Nichtwiederaufnehmens der automatischen Verlangsamungssteuerung umfasst, wenn die elektronische Steuereinheit bestimmt, dass alle der Mehrzahl von Objekten die spezifischen Objekte sind.

8. Fahrzeug, umfassend eine Vorrichtung für die Verlangsamungsunterstützung nach einem der Ansprüche 1 bis 5.

## Revendications

1. Dispositif d'aide à la décélération (110) qui comprend un dispositif de détection d'objet (10) qui est configuré pour détecter un objet au moins devant un véhicule (50), un dispositif de détection d'opération de freinage/conduite (26, 48) qui détecte une opération de freinage/conduite par un conducteur, un dispositif de réduction de vitesse (20) qui fait décélérer le véhicule, et une unité de commande électronique (24, 30) qui commande le dispositif de réduction de vitesse ; l'unité de commande électronique est configurée pour commander le dispositif de réduction de vitesse pour exécuter une commande de décélération automatique destinée à faire décélérer automatiquement le véhicule lorsque le dispositif de détection d'objet détecte un objet qui nécessite une décélération du véhicule et le dispositif de détection d'opération de freinage/conduite ne détecte pas d'opération de freinage/conduite, et interrompre la commande de décélération automatique lorsqu'une opération de conduite est détectée par le dispositif de détection d'opération de freinage/conduite dans une situation où la commande de décélération automatique est en cours d'exécution,
**caractérisé en ce que**
avec un objet qui nécessite une décélération du véhicule (50) et qui n'empêche pas le véhicule de passer par une position de l'objet qui est défini comme l'objet spécifique, l'unité de commande électronique (24, 30) est configurée pour reprendre la commande de décélération automatique si l'unité de commande électronique détermine que l'objet n'est pas un objet spécifique, mais est configurée pour ne pas reprendre la commande de décélération automatique si l'unité de commande électronique détermine que l'objet est un objet spécifique, lorsque l'opération de conduite n'est plus détectée par le dispositif de détection d'opération de freinage/conduite (26, 48) dans une situation où la commande de décélération automatique est interrompue ; et **en ce que** l'unité de commande électronique (24, 30) est configurée, lorsque l'opération de conduite n'est plus détectée par le dispositif de détection d'opération de freinage/conduite (26, 48) dans une situation où le dispositif de détection d'objet (10) détecte une pluralité d'objets nécessitant une décélération du véhicule (50) et la commande de décélération automatique est interrompue, pour reprendre la commande de décélération automatique si l'unité de commande électronique détermine que la pluralité d'objets comportent un objet autre que l'objet spécifique, mais pour ne pas reprendre la commande de décélération automatique si l'unité de commande électronique détermine que l'ensemble de la pluralité d'objets sont les objets spécifiques.

2. Dispositif d'aide à la décélération (100) selon la revendication 1, dans lequel l'objet spécifique est un objet qui ne se déplace pas vis-à-vis d'une route que le véhicule (50) parcourt et par lequel le véhicule peut passer sans entrer en collision.

3. Dispositif d'aide à la décélération (100) selon l'une quelconque des revendications 1 et 2, dans lequel l'unité de commande électronique (24, 30) est configurée pour reprendre la commande de décélération automatique si l'unité de commande électronique détermine que l'objet n'est pas un objet spécifique, mais mettre fin à la commande de décélération automatique si l'unité de commande électronique détermine que l'objet est un objet spécifique, lorsque l'opération de conduite n'est plus détectée par le dispositif de détection d'opération de freinage/conduite (26, 48) dans une situation où la commande de décélération automatique est interrompue.

4. Dispositif d'aide à la décélération (100) selon la revendication 3, dans lequel l'unité de commande électronique (24, 30) est configurée pour reprendre la commande de décélération automatique si l'unité de commande électronique détermine qu'une distance (L) entre le véhicule et l'objet est égale ou supérieure à une distance de référence (Lc), mais mettre fin à la commande de décélération automatique si l'unité de commande électronique détermine que la distance entre le véhicule et l'objet est inférieure à la distance de référence, lorsque l'unité de commande électronique détermine que l'objet est un objet spécifique.

5. Dispositif d'aide à la décélération (100) selon la revendication 4, dans lequel l'unité de commande électronique (24, 30) est configurée pour établir de manière variable la distance de référence (Lc) selon une vitesse de véhicule (V) de sorte que la distance de référence augmente à mesure que la vitesse de véhicule augmente.

6. Procédé d'aide à la décélération qui comprend une étape consistant à exécuter une commande de décélération automatique qui fait décélérer automatique un véhicule (50) lorsqu'un objet nécessitant une décélération du véhicule est détecté par un dispositif de détection d'objet (10) qui est configuré pour détecter un objet au moins devant le véhicule et une opération de freinage/conduite n'est pas détectée par un dispositif de détection d'opération de freinage/conduite (26, 48) qui détecte une opération de freinage/conduite par un conducteur, et une étape consistant à interrompre la commande de décélération automatique lorsque l'opération de conduite est détectée par le dispositif de détection d'opération de freinage/conduite tandis que la commande de décélération automatique est en cours d'exécution, **caractérisé en ce que**
avec un objet qui nécessite une décélération du véhicule et qui n'empêche pas le véhicule de passer par une position de l'objet qui est défini comme l'objet spécifique, le procédé d'aide à la décélération comprend en outre une étape consistant à reprendre la commande de décélération automatique s'il est déterminé que l'objet n'est pas un objet spécifique, mais à ne pas reprendre la commande de décélération automatique s'il est déterminé que l'objet est un objet spécifique, lorsque l'opération de conduite n'est plus détectée par le dispositif de détection d'opération de freinage/conduite dans une situation où la commande de décélération automatique est interrompue ; et
**en ce que** lorsque l'opération de conduite n'est plus détectée par le dispositif de détection d'opération de freinage/conduite (26, 48) dans une situation où le dispositif de détection d'objet (10) détecte une pluralité d'objets nécessitant une décélération du véhicule (50) et la commande de décélération automatique est interrompue, le procédé d'aide à la décélération reprend la commande de décélération automatique si l'unité de commande électronique détermine que la pluralité d'objets comportent un objet autre que l'objet spécifique, mais le procédé d'aide à la décélération ne reprend pas la commande de décélération automatique si l'unité de commande électronique détermine que l'ensemble de la pluralité d'objets sont les objets spécifiques.

7. Programme d'aide à la décélération qui comprend une étape consistant à exécuter une commande de décélération automatique qui fait décélérer automatiquement un véhicule (50) lorsqu'un objet nécessitant une décélération du véhicule est détecté par un dispositif de détection d'objet (10) qui est configuré pour détecter un objet au moins devant le véhicule et une opération de freinage/conduite n'est pas détectée par un dispositif de détection d'opération de freinage/conduite (26, 48) qui détecte une opération de freinage/conduite par un conducteur, et une étape consistant à interrompre la commande de décélération automatique lorsque l'opération de conduite est détectée par le dispositif de détection d'opération de freinage/conduite tandis que la commande de décélération automatique est en cours d'exécution, **caractérisé en ce que**
avec un objet qui nécessite une décélération du véhicule et qui n'empêche pas le véhicule de passer par une position de l'objet qui est défini comme l'objet spécifique, le procédé d'aide à la décélération comprend en outre une étape consistant à reprendre la commande de décélération automatique s'il est déterminé que l'objet n'est pas un objet spécifique, mais à ne pas reprendre la commande de décélération automatique s'il est déterminé que l'objet est un objet spécifique, lorsque l'opération de conduite n'est plus détectée par le dispositif de détection d'opération de freinage/conduite dans une situation où la commande de décélération automatique est interrompue ; et
**en ce que** lorsque l'opération de conduite n'est plus détectée par le dispositif de détection d'opération de freinage/conduite (26, 48) dans une situation où le dispositif de détection d'objet (10) détecte une pluralité d'objets nécessitant une décélération du véhicule (50) et la commande de décélération automatique est interrompue, le programme d'aide à la décélération comprend une étape consistant à reprendre la commande de décélération automatique si l'unité de commande électronique détermine que la pluralité d'objets comportent un objet autre que l'objet spécifique, mais le programme d'aide à la décélération comprend une étape consistant à ne pas reprendre la commande de décélération automatique si l'unité de commande électronique détermine que l'ensemble de la pluralité d'objets sont les objets spécifiques.

8. Véhicule comprenant le dispositif d'aide à la décélération selon l'une quelconque des revendications 1 à 5.
